# FASCICULE DE BREVET EUROPEEN

(11) **EP 0 540 406 B1**
(45) Date de publication et mention de la délivrance du brevet: **21.05.1997**
(21) Numéro de dépôt: 92402906.9
(22) Date de dépôt: 26.10.1992
(51) Int. Cl.: B64C 27/00, B64C 27/12, F16N 29/02

(54) **Boîte de transmission d'hélicoptère avec un système de sauvegarde en cas de perte d'huile de lubrification**
Hubschraubergetriebe mit einem Schutzsystem im Falle eines Schmierölverlustes
Helicopter gear-box with a protection system in case of a loss of lubricating oil

(30) Priorité: 30.10.1991 FR 9113439
(43) Date de publication de la demande: 05.05.1993
(73) Titulaire: AEROSPATIALE Société Nationale Industrielle, 75781 Paris Cédex 16 (FR)
(72) Inventeur: Francois, Roland Clément, F-13480 Cabries (FR)
(74) Mandataire: Phélip, Bruno

(56) Documents cités:
- WO-A-91/05943
- US-A- 4 888 947

## Description

La présente invention se rapporte à une boîte de transmission principale, intermédiaire ou arrière d'hélicoptère, en particulier militaire, combinée à un système de sauvegarde en cas de perte d'huile de lubrification

Dans les ensembles mécaniques multiplicateurs/réducteurs, l'huile de lubrification assure deux fonctions : la réduction des frottements au niveau des engrenages et des paliers, et l'évacuation des pertes de puissance sous forme de chaleur. Dans le cas d'une boîte de transmission principale d'un hélicoptère, l'extraction de la chaleur véhiculée par l'huile se fait généralement sous pression dans un échangeur huile/air, tandis que dans le cas d'une boîte de faible puissance du type "boîte de transmission auxiliaire", l'huile transmet la chaleur aux parois internes du carter de cette boîte par ruissellement et conduction et la paroi extérieure de ce carter transmet la chaleur par convection à l'air ambiant.

En cas de perte d'huile du système de lubrification, les coefficients de frottement des différents organes mécaniques augmentent considérablement, et par voie de conséquence, la part d'énergie perdue sous forme de chaleur devient importante par rapport à la puissance mécanique transmise au rotor de l'hélicoptère. En outre, l'énergie thermique n'est pratiquement plus évacuée, ce qui produit une élévation rapide des températures des engrenages et des roulements. De ce fait, les matériaux subissent des transformations métallurgiques et leurs performances mécaniques s'effondrent, entraînant la perte de la transmission de couple, consécutive à la destruction d'un roulement ou d'une denture, ou à la destruction de l'un et l'autre de ces éléments.

C'est de ce fait qu'en cas de perte d'huile d'une boîte de transmission, et notamment lorsqu'il s'agit de la boîte de transmission principale, l'hélicoptère est contraint de se poser peu de temps après la panne en raison de la destruction rapide des appuis internes, ce qui entraîne à brève échéance l'interruption de la fonction de transmission de puissance au rotor. Cette perte d'huile peut avoir des conséquences très graves lors du survol d'une zone hostile : mer, forêt, gare urbanisée, territoire ennemi, par un hélicoptère qui se trouve alors contraint à un atterrissage ou à un amerrissage qui peut être hasardeux ou même catastrophique.

Le document US-A-4.888.947 concerne un système secondaire de refroidissement de moteurs à turbine d'engins volants, actionné lorsque la pression de l'huile du circuit primaire est anormalement basse.

Ce système comprend:
- à l'entrée, un compresseur d'air,
- un circuit primaire ou boîte contenant les organes moteurs à refroidir,
- un conduit principal d'air reliant le compresseur au composant à refroidir (roulement) contenu dans le circuit primaire lorsque la pression d'huile est basse, de sorte que le flux d'air engendré par le compresseur, aspire de l'huile contenue dans un réservoir et pulvérise le mélange air/huile contre le roulement par l'intermédiaire d'un deuxième conduit,
- un conduit dérivé relié à la sortie du compresseur, contenant une valve de pilotage et un piston/cylindre, cet ensemble permettant d'actionner trois clapets 〈〈 tout ou rien 〉〉 pour les mettre en position d'ouverture lorsque la pression de l'huile est basse;
- une évacuation des calories du circuit primaire vers une boîte de vitesse auxiliaire, cette évacuation se faisant par l'intermédiaire d'un détecteur et de plusieurs conduits et clapets.

Ainsi, le document US-A-4.888.947 décrit un système compliqué de sauvegarde conçu pour protéger le roulement d'une turbine à gaz d'aviation. En plus du circuit de lubrification principal, il est prévu un deuxième circuit d'huile, activé par un circuit à air alimenté par le compresseur de la turbine. En cas de baisse de la pression d'huile en dessous d'un seuil prédéterminé, une commande pilotée par vanne assure la mise en contact du roulement avec, à la fois, un courant d'air comprimé et un mélange d'huile et d'air comprimé, qui sont respectivement délivrés par des conduites dont les extrémités aboutissent près du roulement.

Le document US-A-4.888.947 ne divulgue pas la combinaison d'une boîte de transmission à engrenages pour hélicoptère et d'un système de sauvegarde en cas de perte d'huile de lubrification.

Le but de la présente invention est une boite de transmission principale ou une boite de transmission arrière d'hélicoptères, notamment militaires, combinée à un système de sauvegarde, qui permette de prolonger le temps de fonctionnement de ces ensembles mécaniques après qu'ils aient perdu leur huile de lubrification, tout en conservant intégralement l'architecture de ces ensembles mécaniques.

L'invention est telle que revendiquée à la revendication 1

Le système additionnel de refroidissement de l'enceinte de la boîte de transmission consiste en un système additionnel de circulation d'air, qui comporte une conduite d'entrée d'air frais munie d'une vanne fermée en fonctionnement normal, et d'une conduite de sortie munie d'une soupape fermée en fonctionnement normal. Le dispositif de commande agit, au seuil de la valeur prédéterminée du paramètre représentatif de la perte d'huile de lubrification, sur ladite vanne de manière à actionner son ouverture, et à la maintenir ouverte pendant le fonctionnement du système additionnel de refroidissement, la soupape de sortie s'ouvrant sous l'effet de la pression interne. Le dispositif de commande peut être un dispositif de commande manuel ou automatique. Dans le cas où le système de commande est un dispositif de commande automatique, celui-ci peut être basé sur la mesure du paramètre représentatif de la perte d'huile, ou sur la mesure de la température d'une zone significative d'échauffement anormal du mécanisme.

L'invention peut s'appliquer, par exemple, à une boîte de transmission à engrenages qui comprend une sortie de mouvement à train épicycloïdal. Dans cette structure, l'entrée pour l'admission de l'air est située dans la zone de la couronne du couple conique d'entrée de mouvement, et la sortie pour l'échappement de l'air est située dans la zone du train épicycloïdal de sortie de mouvement. La conduite d'entrée d'air frais peut être raccordée directement à l'extérieur et elle peut comporter une conduite dérivée située en amont de la vanne, permettant une prise d'air dynamique. Afin d'améliorer l'efficacité de l'invention, la conduite d'entrée d'air peut comporter un ventilateur électrique qui est disposé immédiatement en amont de la vanne, c'est-à-dire entre cette vanne et la conduite dérivée.

Selon une variante de l'invention, qui concerne la même structure comportant un couple conique d'entrée et un train épicycloïdal de sortie, la conduite d'entrée d'air est raccordée au compresseur de la turbine du groupe motopropulseur de l'aéronef.

Selon une autre variante de l'invention, qui concerne la même structure comportant un couple conique d'entrée et un train épicycloidal de sortie, le système additionnel de refroidissement comporte un système supplémentaire de lubrification de secours qui utilise un lubrifiant liquide ou solide. Dans cette variante, le système supplémentaire de lubrification de secours comporte une réserve de lubrifiant, externe à la boîte de transmission et raccordée à celle-ci par un tube d'alimentation, qui aboutit immédiatement en aval de la vanne de la conduite d'entrée d'air frais, l'extrémité de cette conduite étant agencée en forme de venturi disposé sensiblement au centre de la conduite d'entrée.

L'invention, qui s'applique aux boîtes de transmission d'hélicoptères en cas de perte d'huile de lubrification, offre l'avantage de prolonger le temps de fonctionnement de ces boîtes de transmission, après qu'elles aient perdu leur huile de lubrification. L'invention offre ainsi l'avantage d'améliorer la survivabilité d'une boîte de transmission d'hélicoptères, en assurant l'évacuation de la chaleur produite dans cette boîte, en l'absence d'huile par circulation d'air sous pression. Cette possibilité offerte par l'invention est particulièrement utile dans le cas des hélicoptères militaires où elle peut assurer la survie de l'appareil survolant une zone hostile.

D'autres avantages ressortiront de l'invention, qui sera mieux comprise à l'aide de la description donnée ci-dessous d'exemples particuliers de réalisation décrits, à titre non limitatif, en référence aux dessins annexés sur lesquels :
- la Figure 1 est une coupe axiale de l'ensemble d'une boîte de transmission principale d'hélicoptère comportant un système de sauvegarde en cas de perte d'huile de lubrification selon l'invention ;
- la Figure 2 est une coupe axiale partielle d'un ensemble de boîte de transmission principale d'hélicoptère analogue à la Figure 1, d'un autre mode de réalisation de l'invention ;
- la Figure 3 est une coupe axiale partielle d'un ensemble de boîte de transmission principale d'hélicoptère analogue à la Figure 1, d'un autre mode de réalisation de l'invention ;
- la Figure 4 est une coupe axiale de l'ensemble d'une boîte de transmission arrière d'hélicoptère comportant un système de sauvegarde en cas de perte d'huile de lubrification selon l'invention ;
- la Figure 5 est une coupe axiale de l'ensemble d'une boîte de transmission principale d'hélicoptère analogue à la Figure 1, d'un autre mode de réalisation de l'invention.

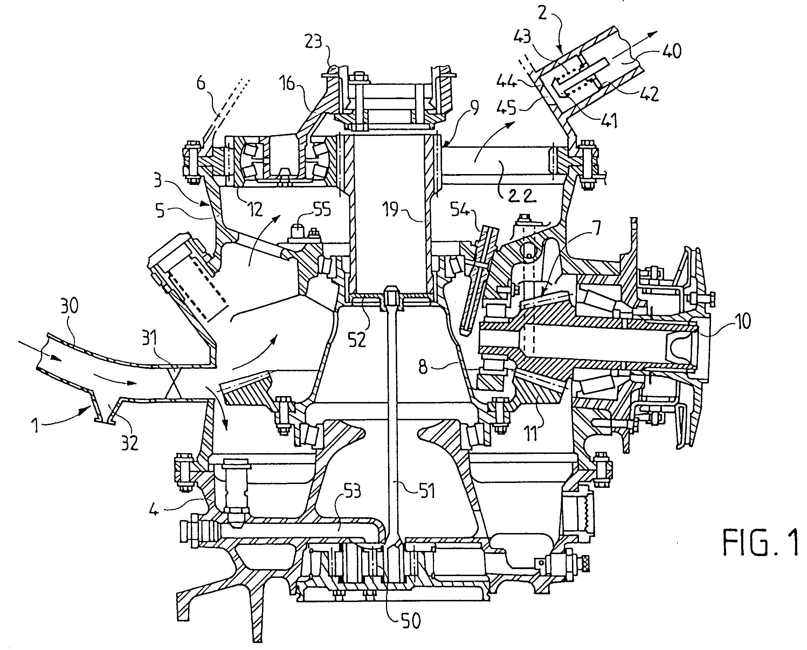

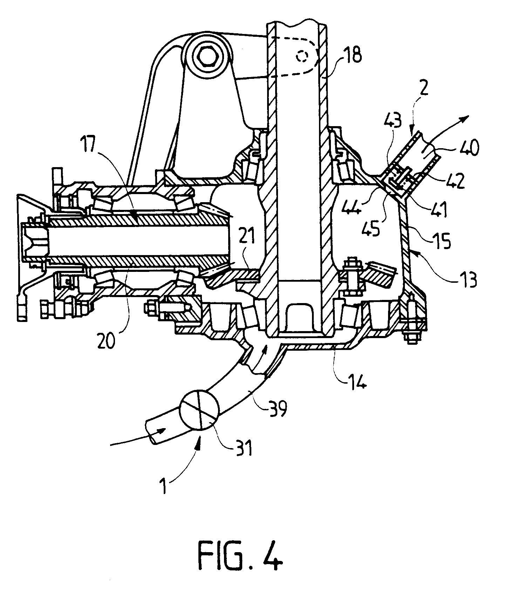

L'invention s'applique aux boîtes de transmission d'hélicoptère, c'est-à-dire aux boîtes de transmission principales, comme celle qui est représentée sur les Figures 1, 2, 3 et 5, ou aux boîtes de transmission arrière, comme celle qui est représentée sur la Figure 4. Le système de sauvegarde comporte essentiellement un système additionnel de refroidissement avec une entrée, référencée 1 sur toutes les Figures, et une sortie, référencée 2 sur toutes les Figures, qui sont disposées l'une et l'autre sur le carter de cet ensemble mécanique. L'entrée 1 et la sortie 2 sont fermées durant le fonctionnement normal, et elles s'ouvrent sous l'action d'un dispositif de commande à une valeur prédéterminée d'un paramètre représentatif de la perte d'huile de lubrification. Le dispositif de commande met alors simultanément en fonction le système additionnel de refroidissement, de manière qu'il y ait circulation de l'agent de refroidissement entre l'entrée 1 et la sortie 2, afin que cet agent de refroidissement, s'étant chargé des calories résultant de l'échauffement entraîné par la perte de l'huile de lubrification, puisse les éliminer à l'extérieur par la sortie du système additionnel de refroidissement.

Selon les différents modes de réalisation de l'invention représentés sur les Figures, le système additionnel de refroidissement de l'enceinte de la boîte de transmission consiste en un système additionnel de circulation d'air. Pour tous ces modes de réalisation représentés, le dispositif de commande peut être un dispositif de commande manuel ou être un dispositif de commande automatique. Dans ce dernier cas, c'est-à-dire dans le cas du dispositif de commande automatique, celui-ci peut être un système de commande basé sur la mesure du paramètre représentatif de la perte d'huile, ou le dispositif de commande automatique peut être basé sur la mesure du paramètre représentatif de la température de l'huile ou d'une zone significative de l'échauffement anormal du mécanisme.

La Figure 1 représente une boîte de transmission d'hélicoptère qui est constituée d'un couple conique 7 recevant l'entrée de mouvement, et d'un train épicycloïdal 9 donnant la sortie de mouvement. Un arbre vertical 8 transmet le mouvement entre le couple conique 7 d'entrée de mouvement et le train épicycloidal 9 de sortie de mouvement. L'ensemble de cette transmission est disposé dans un carter 3. Selon l'architecture représentée sur la Figure 1, le carter 3 est constitué lui-même par trois carters : un carter inférieur 4, un carter principal 5, et un carter supérieur 6. Le carter inférieur 4 est monté sur le carter principal 5 et il est fixé sur celui-ci par un ensemble de boulons. De la même façon, le carter supérieur 6 est lui aussi monté sur le carter principal 5, sur lequel il est fixé par un ensemble de boulons.

Le couple conique 7 d'entrée de mouvement est constitué par un pignon conique 10 et d'une couronne conique 11 d'axe vertical. Le pignon conique 10 est monté sur le carter principal 5 par l'intermédiaire de roulements, tandis que la couronne conique 11 est montée sur l'arbre vertical 8, qui est lui-même disposé à son extrémité inférieure sur le carter inférieur 4, et à son extrémité supérieure sur le carter principal 5 par l'intermédiaire de roulements.

Le train épicycloïdal 9 est constitué par un planétaire 19, une couronne 22, des satellites 12 et un porte-satellites 16. l'entrée de mouvement se fait par le planétaire 19 qui est solidaire en rotation avec l'arbre vertical 8. La couronne 22 est fixe et montée entre le carter principal 5 et le carter supérieur 6 au moyen des boulons de fixation de ces deux carters. Les satellites 12 sont montés sur le porte-satellites 16 au moyen de roulements. La sortie de mouvement se fait par le porte-satellites 16 qui est solidaire de l'arbre-rotor 23.

Le système de lubrification de la boîte de transmission principale, représenté sur la Figure 1, est un système sous pression qui comporte une pompe à huile 50, un échangeur de chaleur air/huile du type radiateur, et des gicleurs 54 et 55 qui arrosent les différents pignons et roulements. La pompe à huile 50 est disposée dans le carter inférieur 4, et elle est entraînée en rotation par un pignon 52 qui est solidaire de l'arbre vertical 8. Ce pignon 52 est relié à la pompe à huile 50 par un arbre 51 de pompe à huile. La pompe à huile 50 aspire l'huile dans le fond du carter inférieur 4, pour l'envoyer dans une canalisation 53 qui est aménagée dans le carter inférieur 4. Cette canalisation 53 débouche sur un circuit extérieur qui est équipé de l'échangeur air/huile afin que l'huile revienne dans la boîte de transmission principale par l'intermédiaire des gicleurs 54 et 55. Après quoi, l'huile retombe au fond de la boîte par gravité.

Selon le mode de réalisation représenté sur la Figure 1, le système additionnel de refroidissement de l'enceinte selon l'invention comporte une entrée 1 pour l'admission de l'air qui est située dans la zone de la couronne 11 du couple conique 7 d'entrée de mouvement, et la sortie 2 pour l'échappement de l'air est située dans la zone du train épicycloïdal 9 de sortie de mouvement. L'entrée 1 pour l'admission de l'air, provenant d'une prise dynamique sur le fuselage, est constituée par une conduite d'entrée d'air frais 30 qui est aménagée et disposée sur le côté du carter principal 5, afin qu'elle débouche directement au voisinage immédiat de la couronne conique 11 d'entrée de mouvement. Une vanne 31 est disposée à l'intérieur de cette conduite d'entrée 30, et elle est disposée immédiatement avant l'entrée dans le carter principal 5. Cette vanne 31 est normalement fermée pendant le fonctionnement normal du circuit de lubrification principal. De plus, la conduite d'entrée 30 comporte une conduite dérivée 32 qui est située en amont de la vanne 31, et qui permet un drainage pour l'eau qui pourrait avoir pénétré dans la conduite d'entrée 30. La sortie 2 pour l'échappement de l'air est constituée par une conduite de sortie 40, qui est disposée sur le carter supérieur 6 au-dessus de la couronne 22 du train épicycloïdal 9. La conduite de sortie 40 est munie d'une soupape 41 avec un ressort 43 disposé entre cette soupape 41 et une paroi 42 aménagée à l'intérieur de la conduite 40 de sortie d'air. La soupape 41 vient s'appliquer sur un siège 44 où est aménagé un orifice de sortie 45.

Lorsqu'un incident quelconque intervient sur le circuit de lubrification de la boîte de transmission principale et que le seuil de la valeur prédéterminée du paramètre représentatif de la perte d'huile de lubrification est atteint, le dispositif de commande agit sur la vanne 31, de manière à actionner son ouverture et à la maintenir ouverte pendant le fonctionnement du système additionnel de refroidissement. La soupape 41 de sortie s'ouvre sous l'effet de la pression interne qui repousse la soupape 41 et la décolle de son siège 44. Le dispositif de commande selon l'invention est un dispositif de commande manuel ou automatique. Dans le cas ou le dispositif de commande est automatique, celui-ci est basé sur la mesure du paramètre représentatif de la perte d'huile, ou sur la mesure de la température d'une zone significative de l'échauffement anormal du mécanisme.

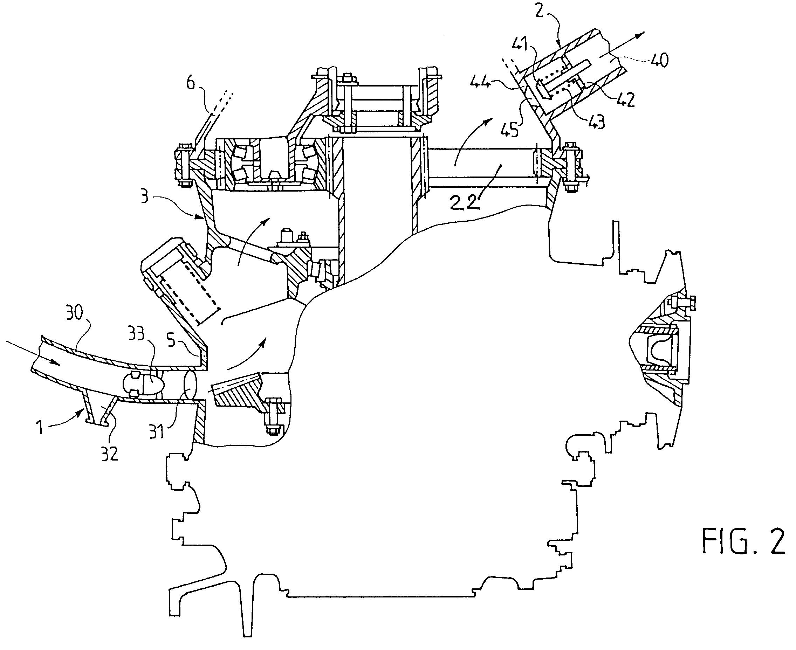

Le système additionnel de refroidissement de l'enceinte selon l'invention, représenté sur la Figure 2, se rapporte à une boîte de transmission principale analogue à celle représentée sur la Figure 1. De la même manière, l'entrée 1 pour l'admission de l'air est située dans la zone de la couronne 11 du couple conique 7 d'entrée de mouvement, et la sortie 2 pour l'échappement de l'air est située dans la zone du train épicycloïdal 9 de sortie de mouvement. L'entrée 1 d'air frais est constituée par une conduite d'entrée 30 qui est disposée sur le carter principal 5, et qui est munie de la vanne 31 fermée en fonctionnement normal. Cette conduite d'entrée 30 est raccordée directement à l'extérieur, et elle comporte une conduite dérivée 32 de drainage d'eau qui est située en amont de la vanne 31. De plus, la conduite d'entrée 30 comporte un ventilateur électrique 33 qui est disposé immédiatement en amont de la vanne 31, c'est-à-dire entre la vanne 31 et la conduite dérivée 32.

La sortie 2 pour l'échappement de l'air est disposée sur le carter supérieur 6 au-dessus du train épicycloïdal 9, de la même manière que dans le cas de la Figure 1. Cette sortie 2 est constituée également d'une conduite de sortie 40 qui débouche directement dans le carter 6 et qui est constituée, comme dans le cas précédent, d'une soupape 41 fermée en fonctionnement normal. La soupape 41 est repoussée par le ressort 43 s'appliquant sur la paroi 42, afin de venir s'appliquer sur le siège 44, dans lequel est aménagé l'orifice de sortie 45.

Lorsque le seuil de la valeur prédéterminée du paramètre représentatif de la perte d'huile de lubrification est atteint, le dispositif de commande agit sur la vanne 31, de manière à actionner son ouverture et à la maintenir ouverte pendant le fonctionnement du système additionnel de refroidissement, la soupape 41 de sortie d'échappement de l'air s'ouvrant sous l'effet de la pression interne. L'air extérieur pénètre alors dans la boîte et la pression d'air peut être produite, soit par la vitesse d'avancement de l'hélicoptère et une prise d'air dynamique, comme dans le cas de la Figure 1, soit par un ventilateur électrique 33 soufflant dans la boîte et actionné par la baisse de pression d'huile par exemple, soit par un système combinant les deux solutions précédentes, c'est-à-dire par la prise d'air dynamique et le ventilateur électrique 33, comme c'est le cas représenté sur la Figure 2.

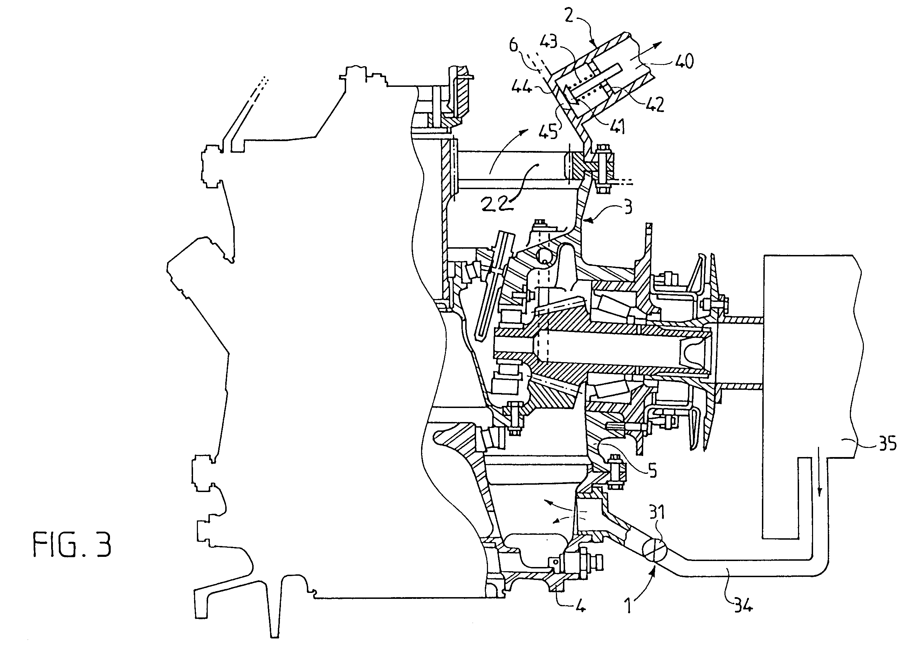

Le système additionnel de refroidissement de l'enceinte, selon l'invention, représenté sur la Figure 3, se rapporte également à une boîte de transmission principale ayant la même architecture que celle de la Figure 1. De la même manière, l'entrée 1 pour l'admission de l'air est située dans la zone de la couronne 11 du couple conique 7 d'entrée de mouvement, et la sortie 2 pour l'échappement de l'air est située dans la zone du train épicycloïdal 9 de sortie de mouvement. Dans le cas de la Figure, l'entrée d'air 1 comporte une conduite d'entrée 34 d'air frais qui est munie d'une vanne 31 fermée en fonctionnement normal. Cette conduite d'entrée 34 d'air est raccordée au compresseur 35 de la turbine du groupe motopropulseur de l'aéronef. La conduite d'entrée 34 débouche dans le carter inférieur 4 en dessous de la couronne 11 du couple conique d'entrée de mouvement 7. De la même manière que dans les cas précédents, la sortie pour l'échappement de l'air est constituée d'une conduite de sortie 40 qui est aménagée sur le carter supérieur 6, et qui est munie d'une soupape 41 fermée en fonctionnement normal. La soupape 41 a une constitution analogue aux précédentes et elle est munie d'un ressort 43 qui s'appuie sur la paroi 42, afin que la soupape 41 vienne fermer l'orifice de sortie 45 du siège 44. Cette soupape 41 de sortie s'ouvre sous l'effet de la pression interne.

Le mode de réalisation de l'invention, représenté sur la Figure 4, se rapporte à une boîte de transmission auxiliaire ou à une boîte de transmission arrière, dans laquelle la lubrification se fait par barbotage de l'huile dans le carter. La boîte de transmission arrière représentée est constituée par un couple conique 17 qui est monté dans un carter 13 fermé par un couvercle 14. Le couple conique 17 est constitué du pignon conique 20 et de la couronne conique 21. Le pignon conique 20 est monté d'une façon classique par l'intérieur de roulements sur le carter principal 15 du carter 13. La couronne conique 21 est montée sur l'arbre-rotor arrière 18 qui est disposé dans le carter principal 15 et dans le couvercle 14 par l'intermédiaire de roulements. Selon l'invention, l'entrée 1 pour l'admission de l'air du système additionnel de refroidissement est située dans la zone de la couronne 21 du couple conique 17 d'entrée de mouvement, et la sortie 2 pour l'échappement de l'air est disposée du côté de la sortie de l'arbre-rotor 18 arrière, c'est-à-dire à l'extrémité du carter principal 15. La conduite d'entrée d'air frais 39 est disposée dans le couvercle 14 et est munie de la vanne 31 qui est fermée en fonctionnement normal, et la sortie pour l'échappement de l'air 2 est constituée par la conduite de sortie 40 qui est munie de la soupape 41 fermée en fonctionnement normal. Cette soupape 41 a une constitution analogue à celles décrites précédemment, c'est-à-dire qu'elle comporte un ressort 43 qui s'appuie sur une paroi 42 afin de plaquer la soupape sur son siège 44 qui est muni d'un orifice de sortie 45.

Lorsque le seuil de la valeur prédéterminée du paramètre représentatif de la perte d'huile de lubrification est atteint, le dispositif de commande agit de manière à actionner l'ouverture de la vanne 31 et à la maintenir ouverte pendant le fonctionnement du système additionnel de refroidissement, et la soupape 41 de sortie s'ouvre sous l'effet de la pression interne.

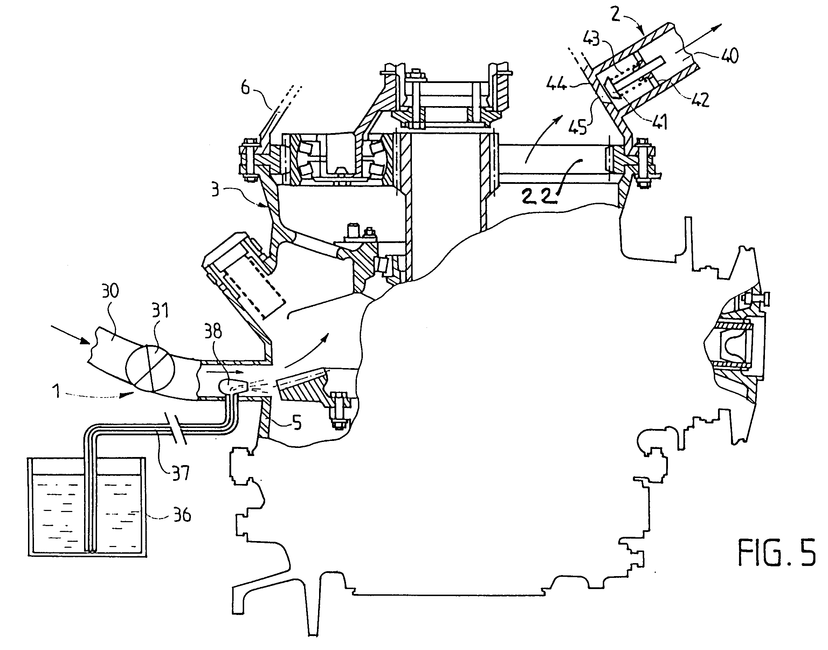

Le dispositif de l'invention représenté sur la Figure 5 se rapporte à une boîte de transmission principale, dont l'architecture est analogue à celle représentée sur la Figure 1. Le système additionnel de refroidissement, selon ce mode de réalisation de l'invention, comporte également une entrée 1 pour l'admission de l'air qui est située dans la zone de la couronne 11 du couple conique 7 d'entrée de mouvement, et une sortie 2 pour l'échappement de l'air qui est située dans la zone du train épicycloïdal 9 de sortie de mouvement. Le système additionnel de circulation d'air comporte une conduite d'entrée 30 d'air frais qui est munie d'une vanne 31 fermée en fonctionnement normal. La sortie pour l'échappement de l'air 2 est constituée par une conduite de sortie 40 qui est munie d'une soupape 41 fermée en fonctionnement normal. De manière analogue aux cas précédents, la soupape 41 comporte un ressort 43 qui s'appuie sur une paroi 42, de manière à appliquer cette soupape 41 sur son siège 44 muni d'un orifice de sortie 45.

De plus, selon ce mode de réalisation de l'invention, le système additionnel de refroidissement comporte un système supplémentaire de lubrification de secours qui utilise un lubrifiant liquide. On pourrait aussi imaginer dans un autre mode de réalisation de l'invention, non représenté sur les Figures, que ce système supplémentaire de lubrification de secours utilise un lubrifiant solide. Le système supplémentaire de lubrification de secours, représenté sur la Figure 5, comporte une réserve de lubrifiant 36 qui est externe à la boîte de transmission. Cette réserve de lubrifiant 36 est raccordée à la conduite 30, par un tube d'alimentation 37 qui aboutit immédiatement en aval de la vanne 31 de la conduite d'entrée 30 d'air frais. L'extrémité 38 de ce tube d'alimentation 37 est agencée en forme de venturi, et il est disposé sensiblement au centre de la conduite d'entrée 30.

Les signes de référence insérés après les caractéristiques techniques mentionnées dans les revendications, ont pour seul but de faciliter la compréhension de ces dernières, et n'en limitent aucunement la portée.

## Revendications

1. Boîte de transmission à engrenages d'hélicoptère, comprenant un couple conique (7, 17) d'entrée de mouvement, combinée à un système de sauvegarde en cas de perte d'huile de lubrification, ledit système comportant un système additionnel de circulation d'air pour le refroidissement de l'enceinte de la boîte et comprenant:
- une conduite d'entrée (1) pour l'admission d'air frais, située dans la zone de la couronne (11, 21) du couple conique (7, 17) et munie d'une vanne (31),
- une conduite de sortie (2) située à l'autre extrémité dans le sens axial, communiquant directement avec l'extérieur et munie d'une soupape (41),
- un dispositif de commande actionné à une valeur prédéterminée d'un paramètre représentatif de la perte d'huile de lubrification ou de la température,
lesdites conduites d'entrée (1) et de sortie (2) étant fermées pendant le fonctionnement normal,
la vanne (31) s'ouvrant directement sous l'action du dispositif de commande et la soupape (41) s'ouvrant simultanément sous l'action de la pression régnant à l'intérieur de la boîte, le dispositif de commande mettant en circulation l'agent de refroidissement, de sorte que cet agent de refroidissement, s'étant chargé des calories résultant de l'échauffement entraîné par la perte de l'huile de lubrification, les évacue directement à l'extérieur à travers la conduite de sortie (2).

2. Boîte de transmission d'hélicoptère selon la revendication 1, comprenant une sortie de mouvement à train épicycloïdal (9), caractérisée en ce que la sortie (2) pour l'échappement de l'air est située dans la zone du train épicycloïdal (9) de sortie de mouvement.

3. Boîte de transmission d'hélicoptère selon l'une quelconque des revendications précédentes, caractérisée en ce que le système additionnel de refroidissement comporte un système supplémentaire de lubrification de secours.

4. Boîte de transmission d'hélicoptère selon la revendication 3, caractérisée en ce que le système supplémentaire de lubrification de secours utilise un lubrifiant liquide ou solide.

5. Boîte de transmission d'hélicoptère selon l'une quelconque des revendications précédentes, caractérisée en ce que le dispositif de commande est un dispositif de commande manuel ou automatique.

6. Boîte de transmission d'hélicoptère selon la revendication 1, caractérisée en ce que la conduite d'entrée (1) d'air frais est raccordée directement à l'extérieur.

7. Boîte de transmission d'hélicoptère selon la revendication 6, caractérisée en ce que la conduite d'entrée (1) est raccordée à une prise d'air dynamique sur le fuselage de l'hélicoptère.

8. Boîte de transmission d'hélicoptère selon la revendication 1, caractérisée en ce que la conduite d'entrée (1) comporte un ventilateur (33) disposé immédiatement en amont de la vanne (31), et une conduite dérivée (32) en amont de ce ventilateur (33).

9. Boîte de transmission d'hélicoptère selon la revendication 1, caractérisée en ce que la conduite d'entrée (1) d'air est raccordée au compresseur (35) de la turbine du groupe motopropulseur de l'hélicoptère.

10. Boîte de transmission d'hélicoptère selon l'une quelconque des revendications 3 à 9, caractérisée en ce que le système supplémentaire de lubrification de secours comporte une réserve de lubrifiant (36), externe à la boîte de transmission et raccordée à celle-ci par un tube d'alimentation (37) qui aboutit immédiatement en aval de la vanne (31) de la conduite d'entrée (1) d'air frais, l'extrémité (38) de ce tube d'alimentation (37) étant agencé en forme de venturi disposé sensiblement au centre de la conduite d'entrée (1).

## Claims

1. Gear box for a helicopter, comprising a conical torque motion input (7, 17), combined with a safeguard system in case of lubricating oil loss, said system containing an additional air circulation system for cooling of the casing of the gear box, with:
- an inlet duct (1) for fresh air intake located in the area of the ring (11, 21) of the motion input conical torque (7, 17) and provided with a valve (31),
- an outlet duct (2) located at the other end, axially, and connected directly to the outside and provided with a valve (41),
- a control device acting at the threshold of the preset value of the parameter significant for lubricating oil loss or for temperature,
said inlet duct (1) and outlet duct (2) being closed during normal operation,
said valve (31) opening under the action of the control device and said valve (41) opening simultaneously under the effect of internal pressure of the gear box, said control device actuating the additional coolant circulation system, so that this coolant, loaded with the calories further to the warm-up caused by the lubricating oil loss, may evacuate the said calories via the outlet duct (2) to the outside.

2. Gear box according to claim 1, comprising an epicycloidal train motion output (9), characterized by the fact that the outlet (2) for air exhaust is located in the area of the motion output epicycloidal train (9).

3. Gear box according to one of the previous claims, characterized by the fact that the additional cooling system contains a supplementary emergency lubricating system.

4. Gear box according to claim 3, characterized by the fact that the supplementary emergency lubricating system uses a liquid or solid lubricant.

5. Safeguard system according to one of the previous claims, characterized by the fact that the control device is a manual or automatic control device.

6. Gear box according to claim 1, characterized by the fact that the inlet duct (1) is connected directly to the outside.

7. Gear box according to claim 6, characterized by the fact that the inlet duct (1) is connected to a dynamic air tapping on the helicopter fuselage.

8. Gear box according to claim 1, characterized by the fact that the inlet duct (1) comprises a fan (33) located immediately upstream the valve (31), and a branch piping (32) upstream this fan (33).

9. Gear box according to claim 1, characterized by the fact that the air inlet duct (1) is connected to the compressor (35) of the aircraft propeller unit turbine.

10. Gear box according to one of claims 3 to 9, characterized by the fact that the supplementary back-up lubricating system comprises a lubricant reserve (36) outside the gear box and connected thereto by a feeding pipe (37) leading immediately downstream the valve (31) of the fresh air inlet duct (1), whereas the end (38) of this feeding pipe (37) is arranged as a Venturi configuration, located approximately in the centre of the inlet duct (1).

## Patentansprüche

1. Zahnradgetriebegehäuse für einen Hubschrauber, das einen konischen Spant (7, 17) als Bewegungseingang umfaßt, das mit einem Schutzsystem für den Fall eines Schmierölverlustes verbunden ist, wobei das System ein Hilfs-Luftzirkulationssystem zur Kühlung der Gehäusewand aufweist und umfaßt:
- eine Einlaßleitung (1) für den Einlaß von Frischluft, die sich im Bereich des Kranzes (11, 21) des konischen Spants (7, 17) befindet und mit einem Ventil (31) versehen ist,
- eine Auslaßleitung (2), die sich in axialer Richtung am anderen Ende befindet, die direkt mit der Außenseite in Verbindung steht und mit einem Ventil (41) versehen ist,
- eine Steuereinrichtung, die bei einem vorbestimmten Wert eines den Verlust von Schmieröl oder die Temperatur wiedergebenden Parameters in Betrieb gesetzt wird,
wobei die Einlaß- (1) und Auslaßleitungen (2) während des normalen Betriebs geschlossen sind,
wobei sich das Ventil (31) direkt unter der Einwirkung der Steuereinrichtung öffnet und sich das Ventil (41) gleichzeitig unter der Einwirkung des im Inneren des Gehäuses herrschenden Drucks öffnet, wobei die Steuervorrichtung das Kühlmittel in Umlauf setzt, so daß dieses Kühlmittel, das die Kalorien, die sich aus der durch den Verlust des Schmieröls ausgelösten Erwärmung ergeben, aufgenommen hat, sie direkt über die Auslaßleitung (2) zur Außenseite abführt.

2. Getriebegehäuse für einen Hubschrauber nach Anspruch 1, das einen Bewegungsausgang mit Umlaufgetriebe (9) umfaßt, dadurch gekennzeichnet, daß der Auslaß (2) für das Ausströmen der Luft sich im Bereich des Umlaufgetriebes (9) des Bewegungsausgangs befindet.

3. Getriebegehäuse für einen Hubschrauber nach einem der vorhergehenden Ansprüche, dadurch gekennzeichnet, daß das Hilfskühlsystem ein zusätzliches Notschmiersystem aufweist.

4. Getriebegehäuse für einen Hubschrauber nach Anspruch 3, dadurch gekennzeichnet, daß das zusätzliche Notschmiersystem ein flüssiges oder festes Schmiermittel verwendet.

5. Getriebegehäuse für einen Hubschrauber nach einem der vorhergehenden Ansprüche, dadurch gekennzeichnet, daß die Steuereinrichtung eine handbediente oder automatische Steuereinrichtung ist.

6. Getriebegehäuse für einen Hubschrauber nach Anspruch 1, dadurch gekennzeichnet, daß die Einlaßleitung (1) für Frischluft direkt mit der Außenseite verbunden ist.

7. Getriebegehäuse für einen Hubschrauber nach Anspruch 6, dadurch gekennzeichnet, daß die Einlaßleitung (1) mit einem Staudrucklufteinlaß am Rumpf des Flugzeugs verbunden ist.

8. Getriebegehäuse für einen Hubschrauber nach Anspruch 1, dadurch gekennzeichnet, daß die Einlaßleitung (1) einen Lüfter (33), der direkt stromaufwärts des Ventils (31) angeordnet ist, und eine Zweigleitung (32) stromaufwärts dieses Lüfters (33) aufweist.

9. Getriebegehäuse für einen Hubschrauber nach Anspruch 1, dadurch gekennzeichnet, daß die Lufteinlaßleitung (1) mit dem Kompressor (35) der Turbine des Triebwerks des Hubschraubers verbunden ist.

10. Getriebegehäuse für einen Hubschrauber nach einem der Ansprüche 3 bis 9, dadurch gekennzeichnet, daß das zusätzliche Notschmiersystem eine Schmiermittelreserve (36) aufweist, die sich außerhalb des Getriebegehäuses befindet und mit diesem durch ein Zufuhrrohr (37) verbunden ist, das direkt stromabwärts des Ventils (31) der Einlaßleitung (1) für Frischluft endet, wobei das Ende (38) dieses Zufuhrrohrs (37) in Form einer Venturidüse zusammengesetzt ist, die im wesentlichen in der Mitte der Einlaßleitung (1) angeordnet ist.
